# EUROPEAN PATENT APPLICATION

(11) **EP 4 159 701 A1**
(43) Date of publication of application: **05.04.2023**
(21) Application number: 22724798.8
(22) Date of filing: 21.03.2022
(51) Int. Cl.: C04B 28/04, C04B 40/00, C04B 111/10

(54) **MIXTURE FOR REDUCING CR(VI) CONTAINED IN CEMENT TO CR(III)**

(30) Priority: 14.04.2021 ES 202130329
(71) Applicant: Aditivos Del Cemento, S.L., 21004 Huelva (ES)
(72) Inventor: FERNÁNDEZ RODRÍGUEZ, José María, 21004 HUELVA (ES); ARCE JIMÉNEZ, Lourdes, 21004 HUELVA (ES); JIMÉNEZ ROMERO, José Ramón, 21004 HUELVA (ES); CANTADOR FERNÁNDEZ, David, 21004 HUELVA (ES); CARDADOR DUEÑAS, María José, 21004 HUELVA (ES); PALOMO ORTEGA, Raquel, 21004 HUELVA (ES); PEREZ MOHEDANO, Salvador, 21004 HUELVA (ES)
(74) Representative: López Camba, Emilia
(86) International application number: PCT/ES2022/070161
(87) International publication number: WO 2022/219211

(57) **Abstract**

The reducing mixture of Cr (VI) contained in cements is a mixture of two industrial by-products:on the one hand, filter cake of ferrous sulphate (Filter Salt), as a residue of the manufacture of TiO₂ and, on the other, slag of iron silicate from the production of electrolytic copper, to which is added a natural aggregate in a small proportion which acts as a neutralizer of the acidity of the ferrous sulphate (dolomite, calcite and/or slaked lime).

## Description

### OBJECT OF THE INVENTION

The present invention relates to a mixture for reducing Cr(VI) contained in cement to Cr(III), the method for obtaining same and the method of use thereof.

### BACKGROUND OF THE INVENTION

In 1950 Jaeger and Pelloni, two Swiss dermatologists, discovered the causes of a common occupational disease in the construction industry. Chromium contained in cement was identified as the cause of allergic eczema in workers' skin, known and feared for decades.

Substances containing hexavalent chromium are classified in European Community legislation as carcinogenic, mutagenic and irritant substances. The hexavalent chromium in cement enhances sensitization and causes severe allergic reactions often suffered by workers who handle it regularly, either in the factory or in the construction sector.

The allergic or contact dermatitis that it produces is very painful and can leave workers disabled. Directive 2003/53/EC of the European Parliament and of the Council required the governments of the Member States to prohibit from 17 January 2005, the use and placing on the market of all cements and preparations containing cement whose content in soluble chromium (VI), once hydrated, exceeds 2 ppm of the dry weight of the cement.

Depending on the raw material used, the chromium content in cements is between 10 ppm and 100 ppm. When mixed with water, the chromium (VI) contained in the cement can dissolve, which causes the aforementioned skin irritation. European legislation in force requires the chemical reduction of chromium (VI) (up to a maximum of 2 ppm) and its conversion into chromium (III), thus drastically reducing the solubility, and therefore its effects on the skin.

Hexavalent chromium can be reduced to trivalent chromium, a substance that is harmless to the skin, using elements with a reducing action. Currently, there are two commonly used compounds on the market, namely tin sulphate and ferrous sulphate.

Patent with publication number EP1923370 describes an additive that reduces chromium in cement based on antimony (III) compounds.

A reducing agent for chromium (VI) contained in cement using ferrous sulfate in its composition is disclosed in US7128782.

Tin products have the advantage of easy handling (low-dosage liquid product) as well as durability over time of the redox effect. The main disadvantage of this reducer is its high cost, so its use is limited to specific moments or cements with a low Cr (VI) content.

With regard to ferrous sulphate, it allows a significant reduction of the hexavalent chromium of the cement and its effect remains for at least three months from its incorporation into same.

The reduction reaction that occurs when ferrous sulfate is used as a chemical reducer is as follows:

CrO₄²⁻ + 3 Fe²⁺ + 4 OH- + 4 H2O → Cr(OH)₃ ↓ + 3 Fe(OH)₃ ↓

Iron (II) sulphate is obtained mainly from the process of manufacturing titanium dioxide by means of the sulphate process, where it appears as a co-product.

There are two stages during this process in which iron (II) sulfate is obtained:
a) It can be obtained by crystallization of the sulfated solution, which contains titanium and iron and which is obtained by disaggregation of the minerals containing titanium. The crystallization of iron (II) sulfate occurs by cooling the hot solution; the iron sulfate obtained by this process is an iron sulfate heptahydrate (also called Caparrosa) with a free humidity of between 4 and 7%. Its physical appearance resembles a wet salt similar to snow. This makes it extremely difficult to correctly dose the product into the cement.
b) In the above process, only part of the iron is removed from the solution. In a process of concentration and subsequent filtration of the remaining solution, an iron sulfate monohydrate (also called Filter Salt) is obtained with a high percentage, between 15-25%, of sulfuric acid.

For an adequate dosage of iron sulfate, there are processes on the market for the transformation of these raw materials into fluidized products that facilitate their handling. The granulation of Filter Salt, previously neutralizing the free sulfuric acid with basic agents such as magnesite or dolomite, is one of them. The process is carried out in a fertilizer-type granulation plant, and the product obtained is an easy-to-use granulate, which would be added in the mill of the cement plant.

Currently, the metal sulfate is mixed with a neutralizing agent (mainly dolomite) which is a natural aggregate, to neutralize the acidity and subsequently granulate it in a granulation plant (with a rotating drum) adding further elements (not more than 10%) that aids in its crushing and/or granulation.

The final product obtained (called Sulfacem or Adifer) is a granular product with a size between 1-10 mm (by means of sifting at the end of the process) and a Fe(II) content of around 15%.

The problem began more than a year ago, since the by-product obtained from the manufacturing process of titanium dioxide, that is, the metal sulfate, had a lower content of Fe (II), which caused the final product (Sulfacem) to have a Fe(II) content lower than usual (between 13-14%) with the resulting damage to its commercialization.

The logistical cost of taking the product from the factory to more remote cement factories can be almost the same as the cost of the product itself, so a change from 15% to 13% of Fe(II) content, with the same logistical cost, meant that the product was not competitive in more distant markets where it is currently being sold (France, Italy, northern Spain, etc.).

This led to a research project that produced the present results, with the aim of increasing the Fe(II) content in the final product, partially replacing the natural aggregate that was added around 20% and that did not contribute Fe(II), with another product that could increase the Fe(II) content.

The ratio of reducing mixture for the reduction of Cr(VI) depends on the Cr(VI) content in the cement to be treated, with a ratio of 0.1% reducer for reducing from 1 ppm to 4 ppm Cr(VI) to Cr(III), depending on other cement components. The average dose is 0.4% of reducing mixture with respect to cement.

The aim of the present invention is to improve the reducing capacity of the mixture of metal sulfate and dolomite used in the reduction of Cr (VI), by mixing it with slag of iron silicate, which is an industrial by-product with some already defined applications obtained from the addition of silica in the melting of the concentrated copper mineral, to separate the iron from the rest of the components that the raw material brings and produce electrolytic copper cathodes.

### DESCRIPTION OF THE INVENTION

The problem solved in the present invention is the reduction of Cr(VI) in cement to Cr(III) decreasing the dose of reducing agent currently used.

The object of the present invention is to try to increase the Fe(II) content in the final product by partially replacing the natural aggregate that was added by around 20% and that did not contribute Fe(II), with another product that could increase the Fe(II) content.

After testing many products, it was seen that iron silicate, a by-product obtained from electrolysis for the manufacture of copper, after analyzing its content in Fe(II) after a milling process, presented quite interesting Fe(II) contents of up to almost 17% after grinding preferably below 0.16 mm.

Initially, this iron silicate had been discarded because it did not serve to neutralize the free sulfuric acid of the metall sulfate, since it has a more or less neutral pH (around 7) and according to the analyses that were available, including those of the manufacturer, it did not have a Fe(II) content but instead a high Fe(III) content (40-50%), which does not serve to reduce Cr (VI) to Cr (III), the final objective of this study

It was also discovered, and this is the real value of the research conducted for more than one year with the University, that if the metal sulfate (without neutralizing it with the reducing agent) was mixed with the iron silicate, part of the Fe(II) containd in the silicate became ferrous sulfate, increasing considerably up to almost 17% of Fe(II) in the final product, which is a very remarkable improvement.

For the subsequent granulation process, it was observed that said initial mixture had to be neutralized with a reducing agent (dolomite, limestone or quicklime), since there was still part of the sulfuric acid contained in the metal sulfate which had not acted with the iron silicate.

However, the proportion of reducing agent may be lower than that used in the original product, not reaching 10%.

In any case, when adding the reducing agent, there is no reduction in the Fe(II) content, which leads to obtaining a final product that can be granulated (or powdered if you do not want to granulate) with a Fe (II) content above 16%, which increases its competitiveness in the ferrous sulfate market versus products with a higher Fe(II) content.

Invention of a new mixture based on industrial by-products that increase the iron (II) content in the final product and at the same time reduce the dolomite content (since it is a non-renewable natural resource). The co-products used as raw materials in the manufacture of the new product come from the chemical industry.

The reducing composition of the invention contains:
- Iron (II) sulphate from the manufacture of titanium dioxide, as an iron sulphate monohydrate (also called filter salt) with a percentage (between 15-25%) of sulphuric acid, in a percentage between 50% to 90%.
- Slag (iron silicates) from the production of electrolytic copper, which enhances the reducing character of the mixture and with a total iron content between 40-50%, being added to the mixture in a proportion between 5% and 45% by weight
- Acidity neutralizing agents which may be any of the following or combinations thereof: dolomite, slaked lime, and calcite, said neutralizing agents in a percentage between 5% and 15% by weight of the total mixture.

The reducing mixture is a granular product obtained by mixing the three components. First, iron sulphate monohydrate (containing between 15-25% of sulphuric acid) is mixed with iron silicate for several days (between 3 and 8 days), thereby releasing iron (II) from the iron silicate and consequently increasing the reducing character of the mixture, associated with the iron (II) content. Second, the acidity of the mixture is neutralized with dolomite to stabilized values that allow the stable granulation of the mixture.

The reducing agent obtained can be added at any stage of the cement manufacturing process, since the reducing effect occurs when the cement is mixed with water for its end use. Thus, it can be added both in the mill where the clinker is mixed and milled with the rest of the raw materials, after the mill and before the cement storage silos and/or after the silos, at the time of cement packaging.

### EXPLANATION OF THE FIGURES

In order to complement the description being made herein, and with the object of aiding the better understanding of the characteristics of the invention, in accordance with a preferred practical embodiment thereof, said description is accompanied, as an integral part thereof, by a set of drawings where, in an illustrative and non-limiting manner, the following has been represented:
Figure 1 shows the particle size fraction passing through a 0.16 mm sieve, as a function of the grinding time.
Figure 2 shows the percentage of Fe(II) contained in the iron silicate as a function of the grinding time.

### PREFERRED EMBODIMENT OF THE INVENTION

In a preferred embodiment of the invention, the reduction of Cr(VI) in cement is carried out by the addition of ferrous sulphate (Filter Salt) filtration cake mixtures obtained as a co-product of the manufacture of TiO₂, with slag of iron silicates obtained from the production of electrolytic copper and neutralizing agents of the acidity of ferrous sulphate.

In a possible embodiment the acidity neutralizing agents of the ferrous sulfate may be any of the following: dolomite, slaked lime and calcite, or combinations thereof.

The proportions of the composition in a possible non-limiting embodiment are:
- Filtration cake of ferrous sulphate (Filter Salt), as a co-product of the manufacture of TiO₂, with between 15-25% of sulphuric acid in its composition, in a percentage between 50% to 90% of the weight of the total mixture.
- Iron silicate from the production of electrolytic copper with a total iron content between 40-50%, added to the mixture in a proportion between 5% and 45% of the weight of the total mixture.
- A natural aggregate, which acts as a neutralizer of ferrous sulphate acidity, in a percentage between 5% and 15% by weight of the total mixture.

The determination of the water-soluble Cr (VI) was carried out as per UNE-EN Standard 196-10:2016, which replaces EN Standard196-10:2006, and which is a method-specific standard for the determination of the water-soluble Cr (VI) content of cement. The method for the determination of water-soluble Cr (VI) consists of two steps, an extraction procedure and an analysis of the Cr (VI) content in the filtered extract (UNE-EN 196-10, Part 10).

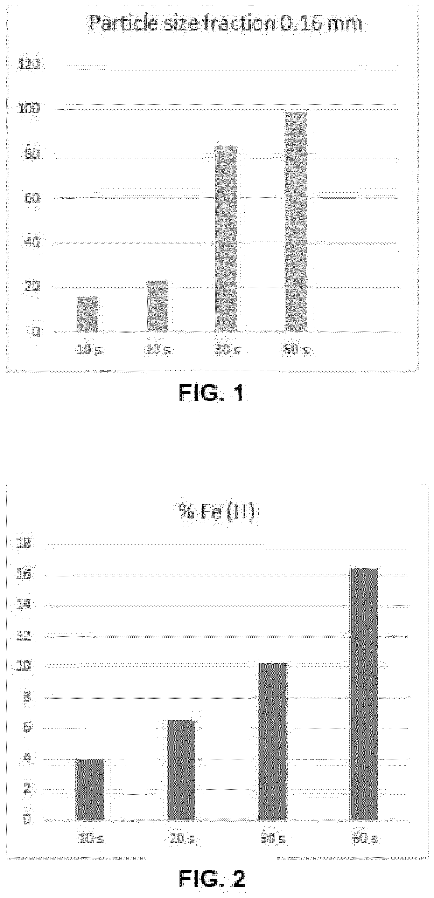

The iron (II) content in the iron silicate is influenced by the granulometry of the by-product. The grinding time determines the particle size distribution and the iron (II) content accessible to the determination, carried out on particles less than 0.16 mm. (Table 1, Figures 1 and 2). As iron silicate particles break, the iron (II) content determined in particles less than 0.16 mm is higher. Depending on the particle size of the ground or screened iron silicate, the iron (II) content ranges from 4 to 16%.

**Table 1: Determination of Fe (II) content in iron silicate (mean value ± standard deviation)**

| | **% Fe (II) in iron silicate** |
|---|---|
| **S. A** | 4.03±0.33 |
| **S. B** | 6.51±0.49 |
| **S. C** | 10.25±0.19 |
| **S. D** | 16.35+0.29 |
| **S.A** (Ground silicate 10 s, particles less than 0.16 mm); | |
| **S.B** (Ground silicate 20 s, particles less than 0.16 mm); | |
| **S.C** (Ground silicate 30 s, particles less than 0.16 mm); | |
| **S.D** (Ground silicate 60 s, particles less than 0.16 mm). | |

Iron silicate alone does not reduce Cr (VI) to Cr (III). Table 2 shows that the reduction of Cr (VI) in cement by mixing cement with iron silicate in proportions of 0.3% and 0.6% of iron silicate was not effective.

**Table 2: Determination of the Cr (VI) content for different doses of iron silicate directly as a reducing agent in cement**

| **SAMPLES** | **% reducer/cement** | **ppm Cr (VI) (mg/kg)** |
|---|---|---|
| Cement (Cem) | | 8.89 |
| Cem. + 0.3% Silicate | 0.3 | 7.64 |
| Cem. + 0.6% Silicate | 0.6 | 7.45 |

In reducing mixtures obtained by mixing metal sulfate,
iron silicate and a lower content of acidity neutralizing agent, there is an increase in the content of iron (II) with respect to the mixtures previously used and which consist of mixtures of only metal sulfate and dolomite.

Determination of the iron (II) content in mixtures of metal sulphate, iron silicate and acidity neutralizing species as a function of the number of days of mixing showed the increased iron (II) content.

The mixing process consists of two stages, in the first of which the metal sulphate and iron silicate are mixed for two to eight days with mixing and resting periods, and subsequently between the third and the ninth day the acidity neutralizing agent is added.

Table 3 shows the evolution of the iron (II) content of the mixtures of metal sulfate (SM) and iron silicate (S) with 5% acidity neutralizing agent:
95% (80SM +20S) + 5% dolomite (D)
95% (80SM +20S) + 5% slaked lime (AC)
95% (80SM +20S) + 5% limestone (C)

**Table 3: Determination of % Fe (II) in the mixtures (means of each day ± sd)**

| | **Day 1** | **Day 3** | **Addition 5% Neutralizing agent on day 5** | **Day 5** | **Day 7** | **Day 9** |
|---|---|---|---|---|---|---|
| **80SM+20S** | 9.63±0.30 | 11.45±0.39 | **+D** | 10.66±0.99 | 15.58±0.02 | 17.41 +0.42 |
| **80SM+20S** | 9.63±0.30 | 11.45±0.39 | **+CA** | 10.73±0.11 | 14.09±0.05 | 17.44±0.16 |
| **80SM+20S** | 9.63±0.30 | 11.45±0.39 | **+C** | 10.33 ±0.74 | 16.19 ±0.02 | 17.80±0.19 |
| SM (metal sulfate); S (iron silicate); D (dolomite); CA (slaked lime); C (limestone) | | | | | | |

The final iron (II) content obtained is approximately 17% for each of the mixtures.

Table 4 shows the evolution of the iron (II) content of the mixtures of metal sulfate and iron silicate with 10% acidity neutralizing agent:
90% (80SM +20S) + 10% dolomite (D)
90% (80SM +20S) + 10% slaked lime (AC)
90% (80SM +20S) + 10% limestone (C)

**Table 4: Determination of % Fe (II) in the mixtures (means of each day ± sd)**

| | **Day 1** | **Day 3** | **Addition 10% Reducing Agent on day 5** | **Day 5** | **Day 7** |
|---|---|---|---|---|---|
| **80SM+20S** | 12.33±0.66 | 12.34±0.28 | **+D** | 11.39±0.64 | 16.70±0.12 |
| **80SM+20S** | 12.33±0.66 | 12.34±0.28 | **+CA** | 11.24±0.49 | 17.16±0.76 |
| **80SM+20S** | 12.33±0.66 | 12.34±0.28 | **+C** | 12.83 ±0.72 | 17.03 ±0.47 |
| SM (metal sulfate); S (iron silicate); D (dolomite); CA (slaked lime); C (limestone) | | | | | |

The final iron (II) content obtained is approximately 17% for each of the mixtures.

The results of reducing Cr (VI) to Cr (III) by adding the mixtures with 5% acidity neutralizing agent (Table 3) and with 10% acidity neutralizing agent (Table 4) are shown in Table 5.

| **Table 5: Determination of Cr (VI) content for different dosages of reducer in cement** | | | |
|---|---|---|---|
| **SAMPLES** | **% reducer/ cement** | **ppm Cr (VI) (mg/kg)** | **Kg reducer/Tm (red. 1ppm)** |
| **Cement** | | **8.89** | |
| **95% (80SM +20S) +5% D** | 0.2 | 0.38 | 0.227 |
| **95% (80SM +20S) +5% D** | 0.1 | 1.81 | 0.141 |
| **95% (80SM +20S) +5% CA** | 0.2 | 0.32 | 0.230 |
| **95% (80SM +20S) +5% CA** | 0.1 | 2.12 | |
| **95% (80SM +20S) +5% C** | 0.2 | 0.39 | 0.235 |
| **95% (80SM +20S) +5% C** | 0.1 | 0.91 | 0.125 |
| **90% (80SM +20S) +10% D** | 0.2 | 2.07 | 0.293 |
| **90% (80SM +20S) +10% D** | 0.1 | 5.32 | |
| **90% (80SM +20S) +10% CA** | 0.2 | 0.48 | 0.238 |
| **90% (80SM +20S) +10% CA** | 0.1 | 4.37 | |
| **90% (80SM +20S) +10% C** | 0.2 | 0.54 | 0.239 |
| **90% (80SM +20S) +10% C** | 0.1 | 4.23 | |
| SM (metallic sulfate); S (iron silicate); D (dolomite); CA (slaked lime); C (limestone) | | | |

Table 5 shows possible dosages that allow to reduce the Cr(VI) content in cement below the standard (2 ppm). For the reduction of 1ppm, an amount between 0.12- 0.29 Kg of reducing mixture per Tm of cement would be needed.

## Claims

1. Composition of a mixture of materials for the reduction of Cr (VI) contained in cement to Cr (III), **characterized in that** it allows reducing the content of Cr (VI) contained in cement below 2 ppm where the composition comprises:
- Filtration cake of ferrous sulphate (Filter Salt), as a co-product of the manufacture of TiO₂, with between 15-25% of sulphuric acid in its composition, in a percentage between 50% to 90% of the weight of the total mixture.
- Iron silicate from the production of electrolytic copper with a total iron content between 40-50%, added to the mixture in a proportion between 5% and 45% of the weight of the total mixture, to which is added
- A natural aggregate which acts as a neutralizer of ferrous sulphate acidity, in a percentage between 5% and 15% by weight of the total mixture.

2. Composition for the reduction of Cr (VI) contained in cement to Cr (III) according to claim 1, **characterized by** a particle size between 0 and 6 mm for iron silicate.

3. Composition for the reduction of Cr (VI) contained in cement to Cr (III) according to any of the preceding claims, **characterised in that** the natural aggregate (acidity neutralizing agent) is one or a combination of the following: dolomite and/or calcite and/or slaked lime.

4. Method for obtaining the composition of a mixture of materials for the reduction of Cr (VI) contained in cement to Cr(III) according to any of the preceding claims, **characterised in that** it comprises the steps of:
- Mixing iron sulphate monohydrate, containing between 15-25% sulphuric acid, with iron silicate, for several days (between 2 and 8),
- Subsequently, the acidity of the mixture is neutralized with a natural aggregate to stabilized values that allow the stable granulation of the mixture.

## Amended claims

### Amended claims under Art. 19.1 PCT

1. Composition of a mixture of materials for the reduction of Cr (VI) contained in cement to Cr (III), **characterized in that** it allows reducing the content of Cr (VI) contained in cement below 2 ppm where the composition comprises:
- Filtration cake of ferrous sulphate (Filter Salt), as a co-product of the manufacture of TiO₂, with between 15-25% of sulphuric acid in its composition, in a percentage between 50% to 90% of the weight of the total mixture.
- Iron silicate from the production of electrolytic copper with a total iron content between 40-50%, added to the mixture in a proportion between 5% and 45% of the weight of the total mixture, to which is added
- A natural aggregate selected from dolomite and/or calcite and/or slaked lime, which acts as a neutralizer of ferrous sulphate acidity, in a percentage between 5% and 15% by weight of the total mixture.

2. Composition for the reduction of Cr (VI) contained in cement to Cr (III) according to claim 1, **characterized by** a particle size between 0 and 6 mm for iron silicate.

3. Method for obtaining the composition of a mixture of materials for the reduction of Cr (VI) contained in cement to Cr (III) according to any of the preceding claims, **characterised in that** it comprises the steps of:
- Mixing iron sulphate monohydrate, containing between 15-25% sulphuric acid, with iron silicate, for several days (between 2 and 8),
- Subsequently, the acidity of the mixture is neutralized with a natural aggregate.
